# EUROPEAN PATENT APPLICATION

(11) **EP 4 418 440 A1**
(43) Date of publication of application: **21.08.2024**
(21) Application number: 23814080.0
(22) Date of filing: 16.01.2023
(51) Int. Cl.: H01M 50/536

(54) **ELECTRODE POLE PIECE, PREPARATION METHOD THEREFOR, AND LITHIUM ION BATTERY**

(30) Priority: 30.12.2022 CN 202211740453
(71) Applicant: Eve Energy Co., Ltd., Huizhou, Guangdong 516006 (CN)
(72) Inventor: LIU, Rongjiang, Huizhou, Guangdong 516006 (CN)
(74) Representative: Nederlandsch Octrooibureau
(86) International application number: PCT/CN2023/072252
(87) International publication number: WO 2024/138805

(57) **Abstract**

The present application provides an electrode sheet, a preparation method thereof, and a lithium ion battery. The electrode sheet includes a current collector and an active material layer disposed on at least one surface of the current collector; a tab recess is disposed inwardly on a long side of the active material layer, a notch is disposed on other long side of the active material layer opposite to the tab recess, an opening is formed on an edge side of the tab recess, the tab recess is exposed from the surface of the current collector, and the notch passes through the current collector along a thickness direction of the electrode sheet. The tab recess of the electrode sheet provided by the present application has a blank foil region with a large area, thereby increasing the contact area between the tab recess and the tab, reducing the internal resistance, improving the charging speed of the battery, and reducing the temperature after charging.

## Description

This application claims priority to Chinese Patent Application 202211740453.9 filed on December 30, 2022. The disclosure of the aforementioned application is incorporated herein by reference in its entirety.

### TECHNICAL FIELD

The present application relates to battery technologies, specifically, to an electrode sheet, a preparation method thereof, and a lithium ion battery.

### BACKGROUND

With a rapid development of electric vehicles and the continuous improvement of people's living standards, people's demand for high-performance lithium-ion batteries is becoming higher and higher. Fast charging is one of the battery performance being pursued. In the related technology, an internal resistance of batteries is large, a charging speed is slow, and a charging temperature is high. An effective improvement method is to reduce the internal resistance, especially an ohmic internal resistance, which has obvious effects on increasing of the charging speed and decreasing of the charging temperature of the batteries.

For increasing charging speed, CN213660479U provides a multi-tabs wound battery, which includes a cell formed by winding a first electrode sheet, a separator and a second electrode sheet, the first sheet being opposite in polarity to the second sheet; the first sheet includes a first current collector, a first tab and a second tab are connected to the first current collector; the first tab is welded to the first current collector, and the second tab is integrally formed with the first current collector; the second sheet includes a second current collector, a third tab and a fourth tab are connected to the second current collector; the third tab is welded to the second current collector, and the fourth tab is integrally formed with the second collector. However, the battery adopts multiple tabs, which is relatively complicated.

At present, the way of increasing the charging speed of lithium ion batteries can also adopt the tab-centered structure, which can reduce the internal resistance and increase the charging speed. CN217134462U discloses a lithium battery having a tab-centered welding structure. The lithium battery includes a case, wherein a core structure which is formed by winding a positive electrode sheet and a negative electrode sheet in sequence and an electrolyte are disposed in the case; a surface of the negative electrode sheet is coated with a separator film to separate the positive electrode and the negative electrode; the positive electrode sheet includes a positive electrode current collector and a positive electrode active coating layer disposed on the positive electrode current collector; the negative electrode sheet includes a negative electrode current collector and a negative electrode active coating layer disposed on the negative electrode current collector; the middle positions of the positive electrode current collector and the negative electrode current collector are both provided with a half blank foil region; and a tab is disposed on the half blank foil region. However, there are also some problems in commercial application of this tab-centered structure.

When slitting a whole electrode sheet with multiple tab recesses, due to a slitting error, the slitting is usually performed at a position very close to an edge of a tab recess, and there is residual active substance at the edge of the tab recess after the slitting. At this time, if the tab recess is directly welded with the tab, the welded tab and residual active substance will have a thickness superposition, which results in a thicker portion and affects the volumetric energy density of the cell, so this problem needs to be solved.

At present, one way to solve this problem is to punch the residual positive electrode on the side of the tab recess so that there is no thickness superposition after connecting the tab. CN114766066A provides an electrode sheet, and preparation method, battery and electronic apparatus thereof, the electrode sheet includes a current collector and a diaphragm is disposed on a surface of the current collector; at least one separator is provided with a tab recess, the tab recess and the tabs are disposed at intervals in the width direction; a notch communicated with the tab recess is disposed on the side of the diaphragm provided with the tab recess, the notch passes through the current collector along the direction perpendicular to the diaphragm, and an arc-shaped surface is disposed between two adjacent inner wall surfaces of the notch. However, in the electrode sheet prepared by the above-mentioned method, the existence of the notch at the tab recess causes the contact area between the blank foil region in the tab recess and the tab to be reduced, and the welding area of the tab is relatively low and the internal resistance is relatively large during the sheet production in the subsequent process, which is not conducive to a more effective improvement of the battery charging speed, and also causes the higher temperature increase during the battery charging.

Therefore, it is urgent to solve the problems that the area of the blank foil region of the tab recess is small, and the contact area with the tab is small when connecting the tab, so that the internal resistance is large, and the charging speed is slow and the charging temperature is high.

### SUMMARY OF THE INVENTION

The following is an overview of the subject described in detail herein. This summary is not intended to limit the scope of protection of a claim.

In view of the deficiencies of the prior art, the object of the present application is to provide an electrode sheet, a preparation method thereof, and a lithium ion battery. The electrode sheet surface provided by the present application is provided with a tab recess inwardly along the long side of the active material layer, and the tab recess exposes the surface of the current collector, so that the tab recess has a large area of blank foil area, thereby increasing the contact area between the tab recess and the tab, reducing the internal resistance, improving the charging speed of the battery, and reducing the temperature after charging.

To achieve this purpose, the following technical scheme is adopted in the present application:

In a first aspect, one or more embodiments of the present application provides an electrode sheet, the electrode sheet includes a current collector and an active material layer disposed on at least one surface of the current collector; a tab recess is disposed inwardly on one long side of the active material layer, a notch is disposed on the other long side of the active material layer opposite to the tab recess, an opening is formed on an edge side of the tab recess, the tab recess is exposed from the surface of the current collector, and the notch passes through the current collector along a thickness direction of the electrode sheet.

One or more embodiments of the present application provides an electrode sheet. A tab recess is arranged on the surface of the electrode sheet inwardly along the long side of the active material layer, and the tab recess exposes the surface of a current collector, so that the tab recess has a large area of an blank foil area, thereby increasing the contact area between the tab recess and the tab, reducing the internal resistance, improving the charging speed of a battery, and reducing the temperature after charging.

It should be noted that the "electrode sheet" in the present application may be a positive electrode sheet or a negative electrode sheet, which is not limited thereto.

The shape of the notch is not specifically limited in the present application. For example, the shape of the notch may be an arc shape or a square shape.

The type of the active material is not specifically limited in the present application. For example, the active material may be a positive electrode active material, for example, may be any one or a combination of at least two of lithium cobaltate, nickel cobalt manganese ternary material, nickel cobalt aluminum ternary material, lithium manganate, lithium iron phosphate, or lithium iron manganese phosphate; the active material may also be a negative active material, such as graphite and/or silicon carbon material.

As a preferred technical solution of the embodiment of the present application, the depth of the tab recess extending into the active material layer is less than or equal to the width of the electrode sheet 2/3, for example, 1/10, 1/5, 3/10, 2/5, 1/2, 3/5 or 2/3.

In one or more embodiment of the present application, the depth of the tab recess extending into the active material layer refers to the side length of the tab recess in the width direction of the electrode sheet.

In one or more embodiments, the depth of the tab extending into the active material layer is 1/4~2/3 of the electrode sheet width, for example, 1/4, 3/10, 2/5, 1/2, 3/5 or 2/3, etc.

As a preferred technical solution of the embodiment of the present application, the pole ear groove is connected with a pole ear.

In one or more embodiments, the tab recess is connected to the tab by welding.

The welding is not specifically limited in the present application, and the welding may be continuous welding or gap welding.

In one or more embodiments, the width of the tab tab recess is less than 2 times the width of the tab.

In one or more embodiments of the present application, the width of the tab recess refers to the side length of the tab recess in the length direction of the electrode sheet.

In one or more embodiments, the width of the notch is greater than the width of the tab.

In one or more embodiments of the present application, the width of the notch refers to the distance between two points farthest from the notch in the length direction of the electrode sheet.

As a preferred technical solution of the embodiment of the present application, the depth of the pole ear groove extending into the active material layer is greater than or equal to the depth of the notch extending into the active material layer.

In one or more embodiments of the present application, the depth of the notch extending into the active material layer refers to the distance between two points farthest from the notch in the width direction of the electrode sheet.

In an embodiment, the ratio of the depth of the tab recess extending into the active material layer to the depth of the notch extending into the active material layer is 10-60 : 1, for example, may be 10: 1, 15:1, 20:1, 25:1, 30: 1, 35:1, 40:1, 45:1, 50:1, 55:1, 60:1, or the like.

As a preferred technical solution of the embodiment of the present application, the width of the pole ear groove is less than or equal to the width of the notch.

In one or more embodiments, the width of the notch is less than 2.5 times the width of the tab recess.

In a second aspect, one or more embodiments of the present application provides a preparation method of the electrode sheet according to the first aspect, the preparation method including: providing an electrode sheet starting plate, where at least two recesses are formed on a surface of the starting plate by a cleaning step, and the recesses are disposed at intervals along a first direction; performing a slitting step on each recess along a slitting line, where the slitting line is parallel to a width direction of the recess, an included angle between the slitting line and the first direction is 10-90° (for example, 10°, 20°, 30°, 40°, 50°, 60°, 70°, 80° or 90°), after the slitting step, each recess forms an independent first recess and an independent second recess, and an area of the first recess is greater than or equal to an area of the second recess; the first recess and the second recess between two adjacent slitting lines are a tab recess and a punching recess respectively; performing punching on the punching recess to form a notch passing through the electrode sheet along a thickness direction of the electrode sheet to obtain the electrode sheet.

It should be noted that the notch passing through the electrode sheet passes through the current collector of the electrode sheet.

The method adopted in the prior art is as follows: slitting is performed near the edge of the tab recess, so that the active material layer remains at the edge of the tab recess, and punching needs to be performed on the residual active material layer, thereby reducing the area of the blank foil region of the tab recess.

According to the present application, the electrode sheet is prepared by the above method, and there is no residual active material layer at the edge of the tab recess, so punching is not required, and the tab recess has a large area of the blank foil region. In addition, the method provided in the present application is of low difficulty and capable of batch production.

It should be noted that after each recess is slit along the slitting line, the length of the formed first recess corresponds to the depth of the tab recess 2 extending into the active material layer 1.

As a preferred technical solution of the embodiments of the present application, the at least two recesses are disposed coaxially.

As a preferred technical solution of the embodiments of the present application, an interval between centers of two adjacent recesses is the same as the interval between two adjacent slitting lines in a direction perpendicular to the slitting line.

As a preferred technical solution of the embodiments of the present application, the cleaning step includes any one or a combination of at least two of laser cleaning, solvent erasing, or dry erasing.

In one or more embodiments, the slitting step includes slitting knife slitting and/or laser slitting.

In one or more embodiments, a rolling step is further provided between the cleaning step and the slitting step.

In a third aspect, one or more embodiments of the present application provides a lithium ion battery, and the lithium ion battery includes the electrode sheet according to the first aspect.

The numerical value range described in the present application includes not only point values enumerated above, but also arbitrary point values between the numerical value ranges not enumerated above. The numerical value range is limited to the length of the document and for the sake of simplicity, the present application does not exhaustively enumerate the specific point values included in the range.

Compared with the prior art, the advantages of the present application are:

the present application provides an electrode sheet. A tab recess is disposed inwardly along the long side of the active material layer 1 on the surface of the electrode sheet of the present application, and the tab recess is exposed from the surface of the current collector, so that the tab recess has a blank foil region with a large area, thereby increasing the contact area between the tab recess and the tab, reducing the internal resistance, improving the charging speed of the battery, and reducing the temperature after charging.

Other aspects can be understood after reading and understanding the drawings and detailed description.

### BRIEF DESCRIPTION OF THE DRAWINGS

The accompanying drawings are used to provide a further understanding of the technical solutions herein and constitute a part of the specification and are used together with the embodiments of the present application to explain the technical solutions herein, and do not constitute a limitation on the technical solutions herein.
FIG. 1 is a schematic structural diagram of an electrode sheet according to one or more embodiments of the present application;
FIG. 2 is a schematic diagram of slitting an electrode sheet starting plate according to Embodiment I of the present application;
FIG. 3 is a schematic structural diagram of an electrode sheet according to Comparison Example I of the present application;
FIG. 4 is a schematic diagram of slitting an electrode sheet starting plate provided in Comparison Example I of the present application;
wherein, 1-active material layer; 2-tab recess; 3-notch; 4-tab; 5-welding region.

### DETAILED DESCRIPTION OF THE EMBODIMENTS

It should be understood that, in the description of the present application, a direction or position relationship indicated by the terms "center," "longitudinal," "transverse," "upper," "lower," "front," "rear," "left," "right," "vertical," "horizontal," "top," "bottom," "inner," "outer" and the like is only based on the direction or position relationship shown in drawings, and is only for the convenience of description of the present application and simplified description, rather than indicating or implying that an apparatus or element referred to must have a specific direction, be constructed and operated in the specific direction, and therefore cannot be understood as a limitation of the present application. In addition, the terms "first," "second," etc., are used for descriptive purposes only and are not understood to indicate or imply relative importance or to imply the number of technical features indicated. Thus, a feature defined with "first," "second," or the like may explicitly or implicitly include one or more of the features. In the description of the present application, "a plurality of" means two or more unless otherwise specified.

It is to be noted that in the description of the present application, unless otherwise expressly provided and limited, the terms "dispose", "connected", "connection" are to be understood in a broad sense, for example, it can be a fixed connection, a detachable connection, or an integral connection; it can be a mechanical connection or an electrical connection; it can be a direct connection or an indirect connection through an intermediate medium; it can be a connection within two elements. To a person of ordinary skill in the art, the specific meaning of the above terms in the present application may be understood by specific circumstances.

The following further describes the technical solutions of the present application by means of detailed implementations.

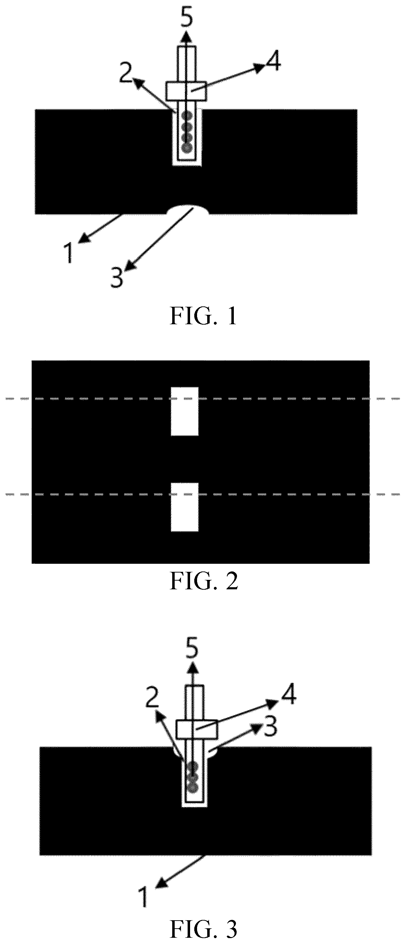

In a detailed implementation, the present application provides an electrode sheet. As shown in FIG. 1, the electrode sheet includes a current collector and an active material layer 1 disposed on at least one surface of the current collector, a tab recess 2 is disposed inwardly on one long side of the active material layer 1, a notch 3 is disposed on the other long side of the active material layer 1 opposite to the tab recess 2, an opening is formed on an edge side of the tab recess 2, the tab recess 2 is exposed from the surface of the current collector, and the notch 3 passes through the current collector along a thickness direction of the electrode sheet.

A tab recess 2 is disposed inwardly along the long side of the active material layer 1 on the surface of the electrode sheet of the present application, and the tab recess 2 is exposed from the surface of the current collector, so that the tab recess 2 has an blank foil region with a large area, thereby increasing the contact area between the tab recess 2 and the tab 4, reducing the internal resistance, improving the charging speed of the battery, and reducing the temperature after charging.

It should be noted that the "electrode sheet" in the present application may be a positive electrode sheet or a negative electrode sheet, which is not limited thereto.

The shape of the notch 3 is not specifically limited in the present application. For example, the shape of the notch 3 may be an arc shape or a square shape.

The type of the active material is not specifically limited in the present application. For example, the active material may be a positive electrode active material, for example, may be any one or a combination of at least two of lithium cobaltate, nickel cobalt manganese ternary material, nickel cobalt aluminum ternary material, lithium manganate, lithium iron phosphate, or lithium iron manganese phosphate. The active material may also be a negative active material, such as graphite and/or silicon carbon material.

Further, a depth of the tab recess 2 extending into the active material layer is less than or equal to 2/3 of a width of the electrode sheet.

In the present application, the depth of the tab recess 2 extending into the active material layer 1 refers to the side length of the tab recess 2 in the width direction of the electrode sheet.

Further, the depth of the tab recess 2 extending into the active material layer is 1/4~2/3 of the width of the electrode sheet.

Further, the tab recess 2 is connected with a tab 4.

Further, the tab recess 2 and the tab 4 are connected by welding.

The welding is not specifically limited in the present application, and the welding may be continuous welding or gap welding.

Further, the width of the tab recess 2 is less than 2 times the width of the tab 4.

In the present application, the width of the tab recess 2 refers to the side length of the tab recess 2 in the length direction of the electrode sheet.

Further, the width of the notch 3 is greater than the width of the tab 4.

In the present application, the width of the notch 3 refers to the distance between two points of the notch 3 farthest away from each other in the length direction of the electrode sheet.

Further, the depth of the tab recess 2 extending into the active material layer 1 is greater than or equal to the depth of the notch 3 extending into the active material layer 1.

In the present application, the depth of the notch 3 extending into the active material layer 1 refers to the distance between the two points of the notch 3 farthest away from each other in the width direction of the electrode sheet.

Further, the ratio of the depth of the tab recess 2 extending into the active material layer 1 to the depth of the notch 3 extending into the active material layer 1 is (10-60) :1.

Further, the width of the tab recess 2 is less than or equal to the width of the notch 3.

Further, the width of the notch 3 is less than 2.5 times of the width of the tab recess 2.

In another detailed implementation, the present application provides a preparation method of the electrode sheet described above, the preparation method including the following steps.

Providing an electrode sheet starting plate, wherein at least two recesses are formed on a surface of the starting plate by a cleaning step, and the recesses are disposed at intervals along a first direction.

Performing a slitting step on each recess along a slitting line, wherein the slitting line is parallel to a width direction of the recess, an included angle between the slitting line and the first direction is 10-90°, after the slitting step, each recess forms an independent first recess and a second recess, and an area of the first recess is greater than or equal to an area of the second recess.

The first recess and the second recess between two adjacent slitting lines are a tab recess 2 and a punching recess respectively; punching is performed on the punching recess to form a notch 3 passing through the electrode sheet along a thickness direction of the electrode sheet to obtain the electrode sheet.

The method adopted in the prior art is as follows: slitting is performed near the edge of the tab recess 2, so that the active material layer 1 remains at the edge of the tab recess 2, and punching needs to be performed on the residual active material layer 1, thereby reducing the area of the blank foil region of the tab recess 2.

According to the present application, the electrode sheet is prepared by the above method, and there is no residual active material layer 1 at the edge of the tab recess 2, so punching is not required, and the tab recess 2 has a large area of the blank foil region. In addition, the method provided in the present application is of low difficulty and capable of batch production.

It should be noted that after each recess is slit along the slitting line, the length of the formed first recess corresponds to the depth of the tab recess 2 extending into the active material layer 1.

Further, the at least two recesses are disposed coaxially.

Further, an interval between centers of two adjacent recesses is the same as the interval between two adjacent slitting lines in a direction perpendicular to the slitting line.

Further, the cleaning step includes any one or a combination of at least two of laser cleaning, solvent erasing, or dry erasing.

Further, the slitting step includes slitting knife slitting and/or laser slitting.

Further, a rolling step is further provided between the cleaning step and the slitting step.

In still another specific implementation, the present application provides a lithium-ion battery, and the lithium-ion battery includes the foregoing electrode sheet.

### Embodiment I

The present embodiment provides a positive electrode sheet, the structure of which is shown in Fig. 1. The positive electrode sheet includes a current collector and an active material layer 1. The active material layer 1 is disposed on at least one surface of the current collector, and the active material is lithium cobaltate. A tab recess 2 is disposed inwardly on one long side of the active material layer 1, and a notch 3 is disposed on the other long side of the active material layer 1 opposite to the tab recess 2. An opening is formed on an edge side of the tab recess 2, and the tab recess 2 is exposed from the surface of the current collector. The notch 3 passes through the positive electrode sheet along a thickness direction of the positive electrode sheet.

The depth of the tab recess 2 extending into the active material layer 1 is 1/2 of the width of the positive electrode sheet. The tab recess 2 is connected with the tab 4 by continuous welding. The width of the tab recess 2 is 1.5 times of the width of the tab 4. The area of the welding region 5 is 90% of the welding end of the tab. The width of the notch 3 is greater than the width of the tab 4. The difference between the width of the notch 3 and the width of the tab 4 is 1.5 times of the width of the tab. The ratio of the depth of the tab recess 2 extending into the active material layer 1 to the depth of the notch 3 extending into the active material layer 1 is 50:1, and the ratio of the width of the tab recess 2 to the width of the notch 3 is 3:5.

The present embodiment also provides a preparation method of a positive electrode sheet, the method including the following steps.

Providing an electrode sheet starting plate, wherein two recesses are formed on a surface of the starting plate by laser cleaning, the recesses are disposed at an interval in a vertical direction, and the recesses are disposed coaxially.

After rolling, laser slitting is performed on each recess along a slitting line. The slitting line is parallel to a direction of a width of the recess. An included angle between the slitting line and the vertical direction is 90°. An interval between centers of the two adjacent recesses is the same as an interval between the two adjacent slitting lines in a direction perpendicular to the slitting lines. As shown in Fig.2, after slitting, each recess forms an independent first recess and an independent second recess, and an area of the first recess is greater than an area of the second recess.

The first recess and the second recess between the two adjacent slitting lines are a tab recess 2 and a punching recess respectively.

Punching is performed on the punching recess to form a notch 3 passing through the positive electrode sheet along a thickness direction of the positive electrode sheet to obtain the positive electrode sheet.

### Embodiment II

The embodiment provides a positive electrode sheet, which is different from Embodiment I in that the area of the welding region 5 is 80% of the area of the welding end of the tab, and the other structures are identical to those of Embodiment I.

### Embodiment III

The embodiment provides a positive electrode sheet, which is different from Embodiment I in that the area of the welding region 5 is 70% of the area of the welding end of the tab, and the other structures are identical to those of Embodiment I.

### Embodiment IV

The present embodiment provides a positive electrode sheet, the structure of which is shown in Fig. 1. The positive electrode sheet includes a current collector and an active material layer 1. The active material layer 1 is disposed on at least one surface of the current collector, and the active material is lithium cobaltate. A tab recess 2 is disposed inwardly on one long side of the active material layer 1, and a notch 3 is disposed on the other long side of the active material layer 1 opposite to the tab recess 2. An opening is formed on one side of the edge of the tab recess 2, and the tab recess 2 is exposed from the surface of the current collector. The notch 3 passes through the positive electrode sheet along a thickness direction of the positive electrode sheet.

The depth of the tab recess 2 extending into the active material layer 1 is 1/4 of the width of the positive electrode sheet. The tab recess 2 is connected with the tab 4 by continuous welding. The width of the tab recess 2 is 1.2 times of the width of the tab 4. The area of the welding region 5 is 80% of the welding end of the tab. The width of the notch 3 is greater than the width of the tab 4. The difference between the width of the notch 3 and the width of the tab 4 is 1.5 times of the width of the tab. The ratio of the depth of the tab recess 2 extending into the active material layer 1 to the depth of the notch 3 extending into the active material layer 1 is 30: 1, and the ratio of the width of the tab recess 2 to the width of the notch 3 is 3:5.

The present embodiment also provides a preparation method of a positive electrode sheet, the method including the following steps.

Providing an electrode sheet starting plate, wherein two recesses are formed on a surface of the starting plateby laser cleaning, the recesses are disposed at an interval in a vertical direction, and the recesses are disposed coaxially.

After rolling, laser slitting is performed on each recess along a slitting line. The slitting line is parallel to a direction of a width of the recess. An included angle between the slitting line and the vertical direction is 90°. An interval between centers of the two adjacent recesses is the same as an interval between the two adjacent slitting lines in a direction perpendicular to the slitting lines. After slitting, each recess forms an independent first recess and an independent second recess, and an area of the first recess is greater than an area of the second recess.

The first recess and the second recess between the two adjacent slitting lines are a tab recess 2 and a punching recess respectively.

Punching is performed on the punching recess to form a notch 3 passing through the positive electrode sheet along a thickness direction of the positive electrode sheet to obtain the positive electrode sheet.

### Embodiment V

The present embodiment provides a positive electrode sheet, the structure of which is shown in Fig. 1. The positive electrode sheet includes a current collector and an active material layer 1. The active material layer 1 is disposed on at least one surface of the current collector, and the active material is lithium cobaltate. A tab recess 2 is disposed inwardly on one long side of the active material layer 1, and a notch 3 is disposed on the other long side of the active material layer 1 opposite to the tab recess 2. An opening is formed on an edge side of the tab recess 2, and the tab recess 2 is exposed from the surface of the current collector. The notch 3 passes through the positive electrode sheet along a thickness direction of the positive electrode sheet.

The depth of the tab recess 2 extending into the active material layer 1 is 2/3 of the width of the positive electrode sheet. The tab recess 2 is connected with the tab 4 by continuous welding. The width of the tab recess 2 is 1.7 times of the width of the tab 4. The area of the welding region 5 is 80% of the welding end of the tab. The width of the notch 3 is greater than the width of the tab 4. The difference between the width of the notch 3 and the width of the tab 4 is 1.5 times of the width of the tab. The ratio of the depth of the tab recess 2 extending into the active material layer 1 to the depth of the notch 3 extending into the active material layer 1 is 60: 1, and the ratio of the width of the tab recess 2 to the width of the notch 3 is 3:5.

The present embodiment also provides a preparation method of a positive electrode sheet, the method including the following steps.

Providing an electrode sheet starting plate, wherein two recesses are formed on a surface of the starting plate by laser cleaning, the recesses are disposed at an interval in a vertical direction, and the recesses are disposed coaxially.

After rolling, laser slitting is performed on each recess along a slitting line. The slitting line is parallel to a direction of a width of the recess. An included angle between the slitting line and the vertical direction is 90°. An interval between centers of the two adjacent recesses is the same as an interval between the two adjacent slitting lines in a direction perpendicular to the slitting line. After slitting, each recess forms an independent first recess and an independent second recess, and an area of the first recess is greater than an area of the second recess.

The first recess and the second recess between the two adjacent slitting lines are a tab recess 2 and a punching recess respectively.

Punching is performed on the punching recess to form a notch 3 passing through the positive electrode sheet along a thickness direction of the positive electrode sheet to obtain the positive electrode sheet.

### Comparison Example I

The present comparison example provides a positive electrode sheet. As shown in FIG. 3, the difference of the comparison example from Embodiment I is that a notch 3 is disposed on one long side of the positive electrode sheet close to a tab recess 2, and no notch 3 is disposed on the other long side opposite to the tab recess 2. A tab 4 is connected to the tab recess 2 by welding, the area of the welding region 5 is 50% of the area of the tab welding end, and the other structures are identical to those of Example I.

The present embodiment also provides a preparation method of a positive electrode sheet, the method including the following steps.

Providing an electrode sheet starting plate, wherein two recesses are formed on a surface of the starting plate by laser cleaning, the recesses are disposed at an interval in a vertical direction, and the recesses are disposed coaxially.

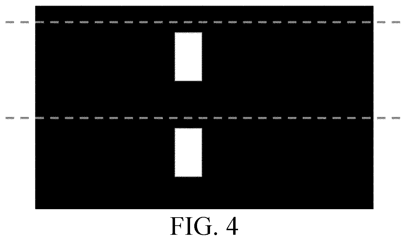

After rolling, laser slitting is performed on each recess along a slitting line. The slitting line is parallel to a direction of a width of the recess. An included angle between the slitting line and the vertical direction is 90°, and a distance between the slitting line and an edge of the tab recess 2 is 2 mm. As shown in FIG. 4, after slitting, the obtained sheet surface has only one recess, and the recess is the tab recess 2.

Punching is performed on the active material remaining at the edge of the punching recess to form a notch 3 passing through the positive electrode sheet along a thickness direction of the positive electrode sheet to obtain the positive electrode sheet.

### Performance Test

The positive electrode sheets provided in Embodiments I-V and Comparison Example I were respectively assembled with a negative electrode sheet to form a lithium ion battery. The negative electrode sheet was prepared by uniformly coating a mixture of graphite, a conductive agent, an adhesive and a dispersant on a copper current collector. The structure of the negative electrode sheet and the structure of the positive electrode sheet were the same. The separator is a separator microporous membrane containing polypropylene and/or polyethylene. The electrolyte is a mixture of carbonates or carboxylic esters and additives.

### (1) Charging Speed Test

Time required to fully charge at a C-rate of 3C from 3.0 V to cut-off voltage (4.48 V) under constant current and constant voltage was recorded.

### (2) Charging Temperature Increase Test

A temperature sensing line was fixed on a tab with an adhesive tape or glue, and charging temperature increase was recorded.

Test results are shown in Table 1.

**Table 1**

| | Charging Speed | Charging Temperature Increase |
|---|---|---|
| Embodiment I | 39 min fully charged | 20.0°C |
| Embodiment II | 40 min fully charged | 21.5°C |
| Embodiment III | 41 min fully charged | 22.0°C |
| Embodiment IV | 42 min fully charged | 22.5°C |
| Embodiment V | 37 min fully charged | 18.5°C |
| Comparative Example I | 45 min fully charged | 23.5°C |

### Analysis:

It can be seen from the results of Embodiment I that the full-charging time of the battery can be shortened by using the electrode sheet provided in the present application, that is, the charging speed of the battery can be improved, and the charging temperature increase is small, which is conducive to the operation of the battery.

It can be seen from the results of Embodiments I-III that the area of the welding region of the tab and the tab recess directly affects the charging speed and the charging temperature increase of the battery. If the area of the welding region is reduced, it causes the internal resistance to be increased, so that the charging speed of the battery is reduced, and the temperature increase is large, which is not conducive to the operation of the battery.

From the results of Embodiment I and Comparative Example I, it can be seen that if there is a notch at an edge of the tab recess of the sheet, a contact area between the tab recess and the tab will be reduced, the internal resistance is further increased, the charging speed of the battery is reduced, and the temperature after charging is relatively high, which is not conducive to the operation of the battery.

## Claims

1. An electrode sheet, **characterized in that** the electrode sheet comprises a current collector and an active material layer disposed on at least one surface of the current collector;
a tab recess is disposed inwardly on one long side of the active material layer, a notch is disposed on other long side of the active material layer opposite to the tab recess, an opening is formed on an edge side of the tab recess, the tab recess is exposed from the surface of the current collector, and the notch passes through the current collector along a thickness direction of the electrode sheet.

2. The electrode sheet according to claim 1, **characterized in that** a depth of the tab recess extending into the active material layer is less than or equal to 2/3 of a width of the electrode sheet,
optionally, the depth of the tab recess extending into the active material layer is 1/4~2/3 of the width the electrode sheet.

3. The electrode sheet according to claim 1 or 2, **characterized in that** the tab recess is connected with a tab;
optionally, the tab recess and the tab are connected by welding.
optionally, the width of the tab recess is less than 2 times of the width of the tab.
optionally, the width of the notch is greater than the width of the tab.

4. The electrode sheet according to claims 1-3, **characterized in that** the depth of the tab recess extending into the active material layer is greater than or equal to the depth of the notch extending into the active material layer;
optionally, the ratio of the depth of the tab recess extending into the active material layer to the depth of the notch extending into the active material layer is (10-60) : 1.

5. The electrode sheet according to claims 1-4, **characterized in that** the width of the tab recess is less than or equal to the width of the notch;
optionally, the width of the notch is less than 2.5 times of the width of the tab recess.

6. A preparation method of an electrode sheet according to claims 1-5, **characterized in that** the preparation method comprising:
providing an electrode sheet starting plate, at least two recesses being formed on a surface of the starting plate by a cleaning step, and the recesses being disposed at intervals along a first direction;
performing a slitting step on each recess along a slitting line, the slitting line being parallel to a width direction of the recess, an included angle between the slitting line and the first direction being 10-90°, wherein after the slitting step, each recess forms an independent first recess and an independent second recess, and an area of the first recess is greater than or equal to an area of the second recess, the first recess and the second recess between two adjacent slitting lines being a tab recess and a punching recess respectively; and
performing punching on the punching recess to form a notch passing through the electrode sheet along a thickness direction of the electrode sheet to obtain the electrode sheet.

7. The preparation method according to claim 6, **characterized in that** the at least two recesses are disposed coaxially.

8. The preparation method according to claim 6 or 7, **characterized in that** an interval between centers of two adjacent recesses is the same as an interval between two adjacent slitting lines in a direction perpendicular to the slitting lines.

9. The preparation method according to claims 6-8, **characterized in that** the cleaning step comprises any one or a combination of at least two of laser cleaning, solvent erasing or dry erasing;
optionally, the slitting step comprises a slitting knife slitting and/or laser slitting.
optionally, a rolling step is further provided between the cleaning step and the slitting step.

10. A lithium ion battery, **characterized by** comprising the electrode sheet according to any one of claims 1-5.
